# EUROPÄISCHE PATENTSCHRIFT

(11) **EP 2 175 972 B1**
(45) Veröffentlichungstag und Bekanntmachung des Hinweises auf die Patenterteilung: **23.05.2012**
(21) Anmeldenummer: 08773505.6
(22) Anmeldetag: 19.06.2008
(51) Int. Cl.: B01F 3/04, B01F 7/00, C02F 3/12, C02F 3/20

(54) **RÜHRVORRICHTUNG FÜR BELEBTSCHLÄMME**
STIRRING DEVICE FOR ACTIVATED SLUDGES
DISPOSITIF D'AGITATION POUR BOUES ACTIVÉES

(30) Priorität: 09.08.2007 DE 102007037584
(43) Veröffentlichungstag der Anmeldung: 21.04.2010
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2008/004915
(87) Internationale Veröffentlichungsnummer: WO 2009/018873

(56) Entgegenhaltungen:
- DE-A1- 3 519 520
- DE-A1- 3 603 466
- DE-C- 900 087
- DE-U1- 9 106 639
- US-A- 2 055 065
- HÖFKEN M.; BISCHOF F.; DURST F.: "Kombiniertes Rühr- und Begsaungssystem für die Abwasser- und Schlammbehandlung" KORRESPONDENZ ABWASSER, ABWASSERTECHNISCHE VEREINIGUNG, ST. AUGUSTIN, DE, Bd. 40, Nr. 12, 1. Dezember 1993 (1993-12-01), Seiten 1904-1909, XP000415294 ISSN: 0341-1540
- HÖFKEN M; HUBER P; HARDES H: "Gerührt und nicht ... - Rühr- und Begasungssysteme für die effektive Abwasserbehandlung" BRAUINDUSTRIE, [Online] Bd. 2, 1998, Seiten 91-95, XP002496266 Gefunden im Internet: URL:http://fzarchiv.sachon.de/index.php?pd f=Fachzeitschriften/Getraenke-Fachzeitschr iften/Brauindustrie/1998/02_98/Bi_02-98_Ru ehr-_und_Begasungssysteme_fuer_Abwasserbeh andlung.pdf> [gefunden am 2008-09-17]
- HÖFKEN M ET AL: "Novel Stirring and Aeration System for Biological and Chemical Reactors" FED / INDUSTRIAL APPLICATIONS OF FLUID MECHANICS (CONFERENCE INFO: PROCEEDINGS OF THE ASME WINTER ANNUAL MEETING, ATLANTA, USA), Bd. 132, 1. Januar 1991 (1991-01-01), Seiten 47-56, XP009105918
- HÖFKEN M ET AL: "Modular Sewage Treatment System for Mediterranean Coastal Cities" CONFERENCE INFO: PROCEEDINGS OF THE IAWPRC/EAWPRC-CONFERENCE WASTE WATER TREATMENT IN COASTAL AREAS, Bd. 25, Nr. 12, 1. Januar 1992 (1992-01-01), Seiten 287-291, XP009105920
- BISCHOF F ET AL: "Abwasser energiesparsam umwälzen" UMWELT, SPRINGER-VDI VERLAG DUESSELDORF, DE, Bd. 21, Nr. 3, 1. März 1991 (1991-03-01), Seiten 126-128, XP009105924 ISSN: 0041-6355
- ZLOKARNIK M ET AL: "Rührtechnik" 19870101, 1. Januar 1987 (1987-01-01), Seiten 188-206, XP009105942

## Beschreibung

Die Erfindung betrifft eine Rührvorrichtung für Belebtschlämme nach dem Oberbegriff des Anspruchs 1.

Eine solche Rührvorrichtung ist aus der DE 91 06 639 U1 bekannt.

Eine weitere Rührvorrichtung ist aus der DE 42 18 027 A1 bekannt. Bei der bekannten Rührvorrichtung wird einer trichterartigen Ausnehmung an einer Unterseite eines hyperboloidartigen Rührkörpers mittels einer Luftzuführleitung Luft zugeführt. An einem unteren Umfangsrand des Rührkörpers sind Scherrippen vorgesehen, mit denen die zugeführte Luft im umgebenden Belebtschlamm in Form kleiner Luftblasen verteilt wird. Untersuchungen haben gezeigt, dass eine dabei sich ausbildende Größenverteilung der Luftblasen nicht besonders homogen ist. Es bilden sich mitunter dabei auch unerwünscht große Luftblasen aus.

Die DE 36 03 466 A1, die DE 900 087 C und die DE 35 19 520 A1 beschreiben Rührvorrichtungen, bei denen ein Abdeckelement eine an der Unterseite gebildete Öffnung einer Ausnehmung des Rührkörpers so abdeckt, dass zwischen einem unteren Umfangsrand des Rührkörpers und dem Abdeckelement ein Ringspalt freibleibt.

Aufgabe der Erfindung ist es, die Nachteile nach dem Stand der Technik zu beseitigen. Es soll insbesondere eine Rührvorrichtung für Belebtschlämme angegeben werden, mit der Luftblasen einer möglichst homogenen Blasengrößenverteilung in einer im Rührkörper umgebenden Flüssigkeit hergestellt werden kann.

Diese Aufgabe wird durch die Merkmale des Anspruchs 1 gelöst. Zweckmäßige Ausgestaltungen der Erfindung ergeben sich aus den Merkmalen der Ansprüche 2 bis 13.

Nach Maßgabe der Erfindung ist vorgesehen, dass eine an einer Unterseite gebildete Öffnung der Ausnehmung mit einem Abdeckelement derart abgedeckt ist, dass zwischen einer unteren Umfangsfläche des Rührkörpers und dem Abdeckelement ein Ringspalt mit einer vorgegebenen Breite frei bleibt, und dass der vertikale Abschnitt der Luftzuführleitung koaxial bezüglich der welle durch das Abdeckelement geführt ist. Durch das Vorsehen des erfindungsgemäß vorgeschlagenen Abdeckelements wird die der Ausnehmung zugeführte Luft nunmehr durch den Ringspalt im Bereich eines Umfangsrands des Rührkörpers geführt. Durch eine geeignete Wahl der vorgegebenen Breite des Ringspalts kann der Ausbildung von Luftblasen mit einem unerwünscht großen Blasendurchmesser entgegen gewirkt werden. Es kann eine besonders homogene Blasenverteilung in dem den Rührkörper umgehenden flüssigen Medium hergestellt werden. Indem die Luftzuführleitung koaxial bezüglich der Welle durch das Abdeckelement geführt ist, wird sichergestellt, dass die der Ausnehmung zugeführte Luft im Wesentlichen lediglich durch den Ringspalt wieder entweicht. Die mit der vorgeschlagenen Rührvorrichtung erzeugte Größenverteilung der Luftblasen zeichnet sich durch einen relativ kleinen mittleren Blasendurchmesser und durch eine monomodale Größenverteilung aus.

Nach einer vorteilhaften Ausgestaltung der Erfindung weist der Ringspalt eine Breite im Bereich von 1 cm bis 15 cm, vorzugsweise 2 bis 10 cm, auf. Ferner können in einem außen liegenden Bereich der unteren Umfangsfläche sich davon erstreckende, im Wesentlichen radial verlaufende Scherrippen vorgesehen sein. Dabei nimmt vorteilhafterweise eine Höhe der Scherrippen zu einem äußeren Umfangsrand des Rührkörpers hin zu. Die vorgenannten Merkmale tragen weiter zur Herstellung einer Blasengrößenverteilung und einem geringen mittleren Blasendurchmesser bei. Der mittlere Blasendurchmesser kann beispielsweise im Bereich von 1 mm bis 10 mm, vorzugsweise 2 mm bis 8 mm, liegen.

Nach einem weiteren Ausgestaltungsmerkmal ist das Abdeckelement rotationssymmetrisch ausgebildet. Es kann sich um eine Scheibe oder einen mit seiner Spitze in die Ausnehmung ragenden Kegel oder hyperboloidartigen Körper handeln. Ein weiterer äußerer Umfangsrand des Abdeckelements kann gezahnt ausgebildet sein oder auch radial nach innen verlaufende Schlitze aufweisen. Im Falle der Ausgestaltung des Abdeckelements als in die Ausnehmung ragender Kegel oder hyperboloidartiger Körper kann das Luftvolumen in der Ausnehmung klein und ein dadurch bedingter unerwünschter Auftrieb des Rührkörpers minimiert werden. Die vorgeschlagenen Strukturen am weiteren Umfangsrand des Abdeckelements ermöglichen über den gesamten Umfangsrand des Rührkörpers hinweg einen besonders gleichmäßigen Luftaustritt. Es kann damit über den gesamten Umfang des Rührkörpers hinweg eine Dispersion mit einer besonders homogene Blasengrößenverteilung erzeugt werden.

Nach einer ersten alternativen Ausgestaltung ist das Abdeckelement relativ zum Rührkörper fest an einem die Welle tragenden Gestell oder an einem Boden eines Beckens befestigt. Falls das Abdeckelement an einem die Welle tragenden Gestell vorgesehen ist, kann die Rührvorrichtung insgesamt als Montageeinheit ausgeführt werden. Dabei ist an einer Spitze des in der Regel turmartig ausgeführten und den Rührkörper umgehenden Gestells ein Motor zum Antrieb der daran hängend angebrachten Welle vorgesehen. Eine Höhe des Gestells kann so ausgebildet sein, dass der Motor entweder oberhalb eines Spiegels des zu rührenden flüssigen Mediums oder auch unterhalb eines Spiegels desselben sich befindet. Es wird insoweit auf den Offenbarungsgehalt der DE 42 18 027 A1 sowie den Offenbarungsgehalt der DE 198 26 098 C2 verwiesen.

Um eine unerwünschte Präzesionsbewegung der Welle zu vermeiden, ist zweckmäßigerweise vorgesehen, dass die Welle durch den Rührkörper hindurchgeführt und an ihrem einen Ende in einem im Abdeckelement vorgesehenen Fanglager aufgenommen ist. Im Falle einer Ausbildung des Abdeckelements als Scheibe kann die Welle auch durch die Scheibe hindurchgeführt und in einem darunter vorgesehenen Fanglager aufgenommen sein.

Nach einer zweiten alternativen Ausgestaltung ist das Abdeckelement über Verbindungsmittel fest mit der Wand des Rührkörpers verbunden. D. h. in diesem Fall bilden der Rührkörper und das Abdeckelement eine Einheit. Dabei können die Verbindungsmittel im Wesentlichen radial verlaufende, sich von der Innenseite der Wand bis zu einer der Ausnehmung zugewandten Oberseite des Abdeckelements erstreckende Stege umfassen. Derartige Stege erstrecken sich vorteilhafterweise lediglich über einen äußeren radialen Abschnitt des Abdeckelements. Bei der vorgeschlagenen zweiten alternativen Ausgestaltung kann das Abdeckelement vorteilhafterweise in einem die Luftzuführleitung umgebenden Fanglager drehbar gehalten sein.

Bei einer Variante der zweiten alternativen Ausgestaltung ist das Abdeckelement als ein hyperboloidartiger weiterer Rührkörper ausgebildet, der mit dem Rührkörper so verbunden ist, dass dessen weitere Spitze von der Ausnehmung des hyperboloidartigen Rührkörpers wegweist. D. h. der hyperboloidartige Rührkörper und der hyperboloidartige weitere Rührkörper sind bezüglich einer senkrecht durch die welle verlaufenden Rotationsebene spiegelsymmetrisch angeordnet. Die vorgeschlagene Ausgestaltung hat den Vorteil, dass durch das in Form eines hyperboloidartigen weiteren Rührkörpers ausgebildete Abdeckelement sich im Bereich des Bodens eine zum weiteren Rührkörper hin gerichtete Strömung ausbildet, welche daran umbiegt und an dessen Umfangsrand radial nach außen gerichtet ist. Durch die Ausbildung einer solchen Strömung werden unerwünschte Ablagerungen im Bereich des Bodens des Beckens vermieden.

Nachfolgend werden Ausführungsbeispiele der Erfindung anhand der Zeichnungen näher erläutert. Es zeigen:
- Fig. 1: eine schematische Querschnittsansicht einer ersten Rührvorrichtung,
- Fig. 2a: eine schematische Querschnittsansicht einer zweiten Rührvorrichtung,
- Fig. 2b: eine weitere schematische Querschnittsansicht gemäß Fig. 2a,
- Fig. 3: eine schematische Querschnittsansicht einer dritten Rührvorrichtung,
- Fig. 4: eine schematische Querschnittsansicht einer vierten Rührvorrichtung und
- Fig. 5: eine schematische Querschnittsansicht einer fünften Rührvorrichtung.

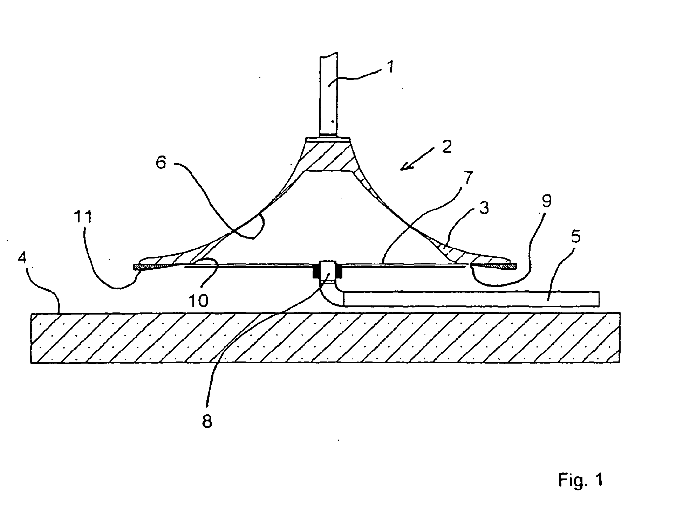

Bei der in Fig. 1 gezeigten ersten Rührvorrichtung ist an einer Welle 1 ein Rührkörper 2 angebracht. Eine Wand 3 des Rührkörpers 2 weist eine hyperboloidartige Form auf. In der Nähe eines Bodens 4 eines (hier nicht gezeigten) Beckens verläuft eine Luftzuführleitung 5 zum Zuführen von Luft in eine an einer dem Boden 4 gegenüberliegende Unterseite des Rührkörpers 2 gebildete trichterartige Ausnehmung 6. Eine zum Boden 4 hin gewandte Öffnung der Ausnehmung 6 ist mit einer Scheibe 7 abgedeckt. Durch ein Zentrum der Scheibe 7 ist ein vertikal verlaufender Abschnitt 8 der Luftzuführleitung 5 hindurchgeführt. Die Scheibe 7 kann fest oder auch drehbar am vertikal verlaufenden Abschnitt 8 angebracht sein. Es kann selbstverständlich auch sein, dass die Scheibe 7 mittels geeigneter Stützelemente fest am Boden 4 befestigt ist. Im vorliegenden Ausführungsbeispiel ist die Scheibe 7 relativ zum Rührkörper 2 entweder feststehend oder auch frei drehbar gelagert. Die vorgeschlagene Drehbarkeit der Scheibe 7 trägt zu einer Verminderung eines Strömungswiderstands gegenüber einer durch den Rührkörper 2 erzeugten rotierenden Strömung bei.

zwischen einer unteren Umfangsfläche 9 des Rührkörpers 2 und einem ersten Umfangsrand der Scheibe 7 ist ein Ringspalt 10 gebildet. In einem radial weiter außen liegenden Abschnitt der unteren Umfangsfläche 9 sind im Wesentlichen radial verlaufende erste Scherrippen 11 vorgesehen. Eine Höhe der Scherrippen 11 nimmt vorzugsweise in eine radial nach außen weisende Richtung zu.

Durch die Abdeckung der Ausnehmung 6 mittels der Scheibe 7 wird die durch die Luftzuführleitung 5 zugeführte Luft nunmehr durch den Ringspalt 10 gezwungen. Die entweichende Luft wird dann durch den rotierenden Rührkörper 2, insbesondere die am unteren Umfangsrand 9 vorgesehenen Scherrippen 11, in Form feiner Luftblasen im umgehenden flüssigen Medium verteilt.

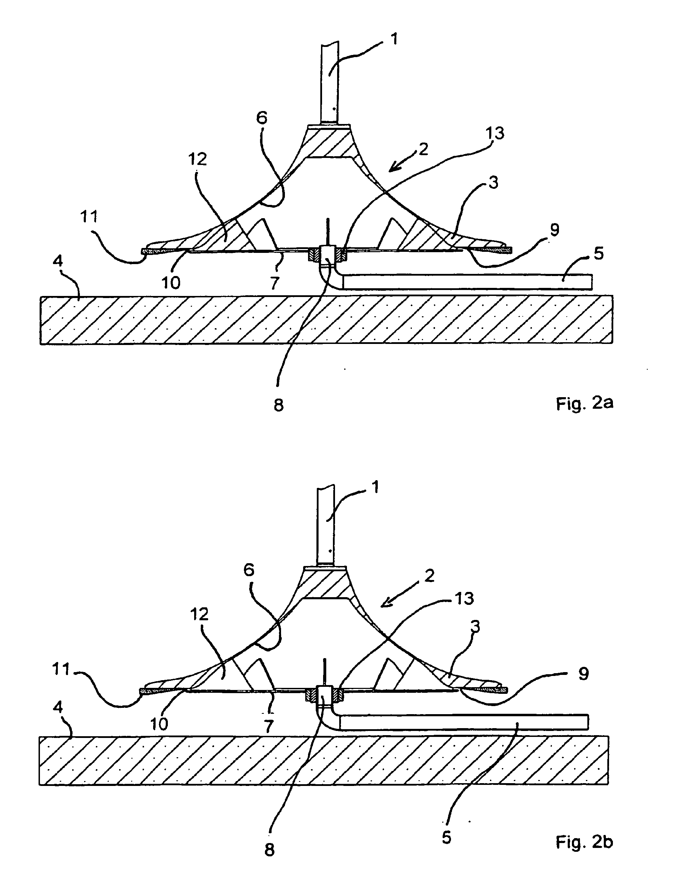

Bei der in den Fig. 2a und 2b gezeigten zweiten Rührvorrichtung 2 ist die Scheibe 7 mittels davon sich im Wesentlichen in einer radialen Richtung erstreckender Verbindungsstege 12 mit einer Innenseite der Wand 3 fest verbunden. Die Scheibe 7 ist bezüglich einer unteren Umfangsfläche 9 des Rührkörpers 2 wiederum so ausgebildet und/oder angeordnet, dass ein Ringspalt 10 frei bleibt. Der vertikale Abschnitt 8 der Luftzuführleitung 5 ist durch das Zentrum der Scheibe 7 geführt. Ein den vertikalen Abschnitt 8 umgehendes Fanglager 13 verbindet die Scheibe 7 mit dem vertikalen Abschnitt 8.

Auch bei der in den Fig. 2a und 2b gezeigten zweiten Vorrichtung tritt die in die Ausnehmung 6 mittels der Luftzuführleitung 5 zugeführte Luft im Wesentlichen über den Ringspalt 10 in der Nähe der unteren Umfangsfläche 9 aus und wird insbesondere durch die Wirkung der rotierenden Scherrippen 11 fein im umgehenden flüssigen Medium verteilt.

In den gezeigten Ausführungsbeispielen ist die Ausnehmung 6 jeweils mit einer Scheibe 7 abgedeckt. Anstelle der Scheibe 7 können aber auch andersartig ausgebildete Abdeckmittel verwendet werden. Beispielsweise ist es möglich, kegelartige oder auch hyperboloidartig geformte Abdeckmittel anstelle der Scheibe 7 zu verwenden, so dass zwischen einer Innenseite der Wand 3 und dem Abdeckmittel lediglich ein Spalt zum Zuführen der Luft zum Ringspalt 10 verbleibt. Damit kann ein durch das Zuführen der Luft in die Ausnehmung 6 erzeugter Auftrieb minimiert werden.

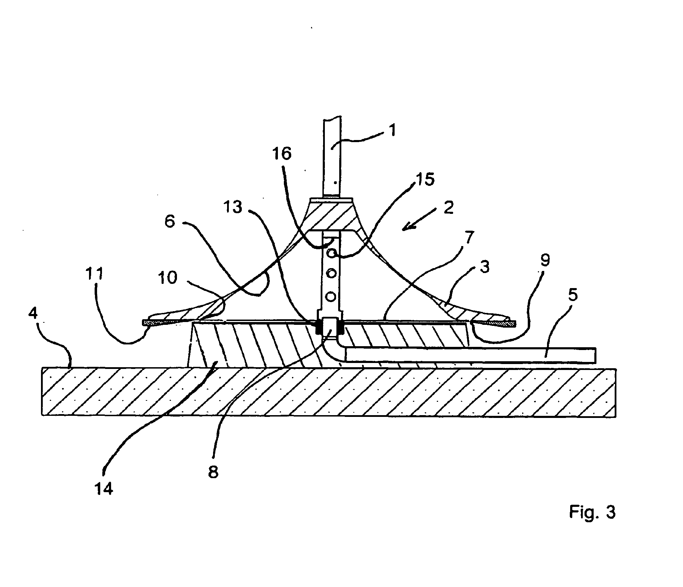

Fig. 3 zeigt eine schematische Querschnittsansicht einer dritten Rührvorrichtung. Die dritte Rührvorrichtung ist ähnlich zur ersten Rührvorrichtung ausgestaltet. Dabei ist die Scheibe 7 allerdings Bestandteil eines auf dem Boden 4 abgestützten - ebenfalls scheibenförmig ausgebildeten - Sockels 14. In dem vorzugsweise aus Beton hergestellten Sockel 14 sind die Luftzuführleitung 5 und der vertikale Abschnitt 8 der Luftzuführleitung 5 fixiert. Ein den Rührkörper 2 durchgreifender Abschnitt der Welle 1 ist in dem den vertikalen Abschnitt 8 umgebenden Fanglager 13 rotierbar gehalten. Das Fanglager 13 ist in diesem Fall zweckmäßigerweise im Sockel 14 aufgenommen. Der den Rührkörper 2 durchgreifende Abschnitt der Welle 1 weist Belüftungsöffnungen 15 auf, durch welche die durch die Luftzuführleitung 5 zugeführte Luft in die Ausnehmung 6 eingeleitet wird. Zu diesem zweck ist der die Welle 1 durchgreifende Abschnitt mit einer Trennwand 16 versehen.

Die hier vorgeschlagene Ausgestaltung der Fixierung der Luftzuführleitung 5 des vertikalen Abschnitts 8 sowie des den vertikalen Abschnitt 8 umgehenden Fanglagers 13 kann selbstverständlich auch auf die zweite Rührvorrichtung angewandt werden. Um in diesem Fall einen Strömungswiderstand möglichst gering zu halten, ist zwischen einer Unterseite der Scheibe 7 und einer dem Rührkörper 2 zugewandten Oberseite des Sockels 14 allerdings ein ausreichender Abstand vorzusehen.

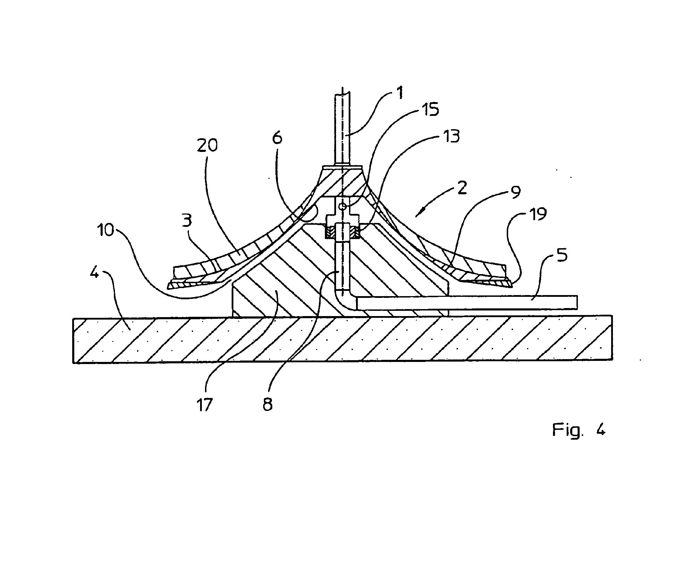

Fig. 4 zeigt eine vierte Rührvorrichtung, welche ähnlich zur dritten Rührvorrichtung ausgestaltet ist. Dabei ist ein weiterer Sockel 17, der beispielsweise aus Beton hergestellt sein kann, in Form eines Kegelstumpfs ausgebildet, dessen Spitze in die Ausnehmung 6 ragt. Im Bereich der Spitze ist das Fanglager 13 vorgesehen. An einer der Ausnehmung 6 abgewandten Außenseite der Wand 3 sind Transportrippen 20 angebracht, deren Höhe in Richtung eines Umfangsrands des Rührkörpers 2 zunehmen kann. Die Transportrippen 20 können in einer (hier nicht gezeigten) Draufsicht auch gebogen sein. Derartige Transportrippen 20 können selbstverständlich bei den zuvor beschriebenen Ausgestaltungen benutzt werden.

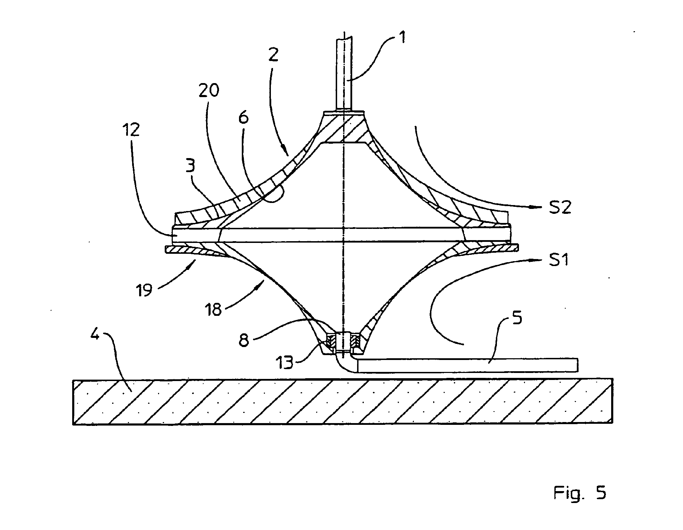

Fig. 5 zeigt eine schematische Querschnittsansicht einer fünften Rührvorrichtung. Dabei ist das Abdeckelement in Form eines hyperboloidartigen weiteren Rührkörpers 18 ausgebildet, dessen Form zum Rührkörper 2 korrespondiert. Der weitere Rührkörper 18 ist über Verbindungsstege 12 fest mit dem Rührkörper 2 verbunden. Eine weitere Spitze des weiteren Rührkörpers 18 weist von der Ausnehmung 6 weg, d. h. der Rührkörper und der weitere Rührkörper sind im Wesentlichen bezüglich einer Rotationsebene spiegelbildlich angeordnet. Das Fanglager 13 ist im Bereich der weiteren Spitze des weiteren Rührkörpers 18 angeordnet. Mit dem Bezugszeichen 19 sind weitere Scherrippen bezeichnet, welche an einer der aus dem 6 abgewandten Außenseite des weiteren Rührkörpers 18 in einem radial außen liegenden Abschnitt vorgesehen sind. Mit den Pfeilen S1, S2 ist die Richtung sich ausbildender Strömungen im Falle einer Rotation der Rührkörper angedeutet. Durch das Vorsehen einer in Form eines hyperboloidartigen weiteren Rührkörpers 18 ausgebildeten Abdeckung wird in der Nähe des Bodens 4 eine Unterströmung S1 erzeugt, welche im Bereich des weiteren Rührkörpers 18 umbiegt und in eine radial äußere Richtung weist. Eine Oberströmung S2 biegt in ähnlicher Weise am Rührkörper 2 um und weist ebenfalls in eine radial vom Rührkörper 2 aufweisende Richtung. - Mit der vorgeschlagenen Ausgestaltung ist es einerseits möglich, besonders feine Luftblasen im zu rührenden Medium zu erzeugen und diese andererseits radial besonders weit weg vom Rührkörper in das Medium zu transportieren. Schließlich kann durch die sich ausbildende Unterströmung S1 eine unerwünschte Ablagerung von Sediment am Boden 4 des Beckens vermieden werden.

### Bezugszeichenliste

- 1: welle
- 2: Rührkörper
- 3: Wand
- 4: Boden
- 5: Luftzuführleitung
- 6: Ausnehmung
- 7: Scheibe
- 8: vertikaler Abschnitt
- 9: untere Umfangsfläche
- 10: Ringspalt
- 11: Scherrippe
- 12: Verbindungssteg
- 13: Fanglager
- 14: Sockel
- 15: Luftzuführleitung
- 16: Trennwand
- 17: weiterer Sockel
- 18: weiterer Rührkörper
- 19: weitere Scherrippe
- 20: Transportrippe

## Patentansprüche

1. Rührvorrichtung für in einem Becken aufgenommene Belebtschlämme, mit einem an einer Welle (1) angebrachten, eine hyperboloidartig geformte Wand (3) aufweisenden Rührkörper (2) und einer am Boden (4) des Beckens verlaufenden Luftzuführleitung (5, 8) zum Zuführen von Luft, wobei ein vertikaler Abschnitt (8) der Luftzuführleitung zu einer an einer Unterseite des Rührkörpers (2) ausgebildeten trichterartigen Ausnehmung (6) weist,
**dadurch gekennzeichnet, dass**
eine an der Unterseite gebildete Öffnung der Ausnehmung (6) mit einem Abdeckelement (7) derart abgedeckt ist, dass zwischen einer unteren Umfangsfläche (9) des Rührkörpers (2) und dem Abdeckelement (7) ein Ringspalt (10) mit einer vorgegebenen Breite frei bleibt, und dass der vertikale Abschnitt (8) der Luftzuführleitung (8) koaxial bezüglich der Welle (1) durch das Abdeckelement (7) geführt ist.

2. Rührvorrichtung nach Anspruch 1, wobei der Ringspalt (10) eine Breite im Bereich von 1 cm bis 15 cm, vorzugsweise 2 cm bis 10 cm, aufweist.

3. Rührvorrichtung nach einem der vorhergehenden Ansprüche, wobei in einem radial außen liegenden Bereich der unteren Umfangsfläche (9.) sich davon erstreckende, radial verlaufende Scherrippen (11) vorgesehen sind.

4. Rührvorrichtung nach Anspruch 3, wobei eine Höhe der Scherrippen (11) zu einem äußeren Umfangsrand des Rührkörpers (2) hin zunimmt.

5. Rührvorrichtung nach einem der vorhergehenden Ansprüche, wobei das Abdeckelements rotationssymmetrisch ausgebildet ist.

6. Rührvorrichtung nach einem der vorhergehenden Ansprüche, wobei das Abdeckelement eine Scheibe (7) oder ein mit seiner Spitze in die Ausnehmung (6) ragender Kegel oder hyperboloidartiger Körper ist.

7. Rührvorrichtung nach einem der vorhergehenden Ansprüche, wobei das Abdeckelement relativ zum Rührkörper (2) fest an einem die welle (1) tragenden Gestell oder an einem Boden (4) eines Beckens befestigt ist.

8. Rührvorrichtung nach einem der Ansprüche 1 bis 6, wobei das Abdeckelement über verbindungsmittel fest mit der wand (3) des Rührkörper (2) verbunden ist.

9. Rührvorrichtung nach Anspruch 8, wobei die verbindungsmittel im Wesentlichen radial verlaufende, sich von der Innenseite der Wand (3) bis zu einer der Ausnehmung (6) zugewandten Oberseite des Abdeckelements erstreckende Stege (12) umfassen.

10. Rührvorrichtung nach einem der Ansprüche 8 oder 9, wobei das Abdeckelement ein hyperboloidartiger weiterer Rührkörper (18) ist, der mit dem Rührkörper (2) so verbunden ist, dass dessen weitere Spitze von der Ausnehmung (6) des Rührkörpers (2) weg weist.

11. Rührvorrichtung nach Anspruch 10, wobei an einem radial außen liegenden Abschnitt einer Außenseite des weiteren Rührkörpers (18) weitere Scherrippen (19) vorgesehen sind.

12. Rührvorrichtung nach einem der vorhergehenden Ansprüche, wobei die welle (1) durch den Rührkörper (2) hindurch geführt und an ihrem einen Ende in einem im Abdeckelement vorgesehenen Fanglager (13) aufgenommen ist.

13. Rührvorrichtung nach einem der vorhergehenden Ansprüche, wobei das Abdeckelement in einem die Luftzuführleitung umgebenden Fanglager (13) drehbar gehalten ist.

## Claims

1. Stirring device for activated sludges contained in a basin comprising a stirring body (2) having a hyperboloid-like shaped wall (3) attached to a shaft (1) and an air supply line (5, 8) running along the bottom (4) of the basin to supply air, wherein a vertical section (8) of the air supply line points to a funnel-like recess (6) formed on an underside of the stirring body (2)
**characterized in that**
an opening of the recess (6) formed on the underside is covered with a covering element (7) in such a way that an annular gap (10) with a specified width remains free between a lower circumferential surface (9) of the stirring body (2) and the covering element (7), and that the vertical section (8) of the air supply line (8) is led through the covering element (7) coaxially in relation to the shaft (1).

2. Stirring device as defined in claim 1, wherein the annular gap (10) has a width in the range from 1 cm to 15 cm, preferably from 2 cm to 10 cm.

3. Stirring device as defined in one of the preceding claims, wherein, in a radially outer area of the lower outside circumferential surface (9), radially running shear ribs (11) extending therefrom are provided.

4. Stirring device as defined in claim 3, wherein a height of the shear ribs (11) increases towards an outer circumferential boundary of the stirring body (2).

5. Stirring device as defined in one of the preceding claims, wherein the covering element has a rotationally symmetrical shape.

6. Stirring device as defined in one of the preceding claims, wherein the covering element is a disk (7) or a cone or hyperboloid-like body with its tip protruding into the recess (6).

7. Stirring device as defined in one of the preceding claims, wherein the covering element is firmly attached relative to the stirring body (2) to a frame carrying the shaft (1) or to a bottom (4) of a basin.

8. Stirring device as defined in one of the claims 1 to 6, wherein the covering element is firmly connected via connection means to the wall (3) of the stirring body (2).

9. Stirring device as defined in claim 8, wherein the connection means comprise essentially radially running bars (12) extending from the inner side of the wall (3) to an upper side of the covering element facing the recess (6).

10. Stirring device as defined in one of the claims 8 or 9, wherein the covering element is a hyperboloid-like further stirring body (18) which is connected to the stirring body (2) in such a way that its further tip is pointing away from the recess (6) of the stirring body (2).

11. Stirring device as defined in claim 10, wherein further shear ribs (19) are provided on a radially outer section of an outer side of the further stirring body (18).

12. Stirring device as defined in one of the preceding claims, wherein the shaft (1) is led through the stirring body (2) and is held on its one end in a safety bearing (13) provided in the covering element.

13. Stirring device as defined in one of the preceding claims, wherein the covering element is held rotatably in a safety bearing (13) surrounding the air supply line.

## Revendications

1. Dispositif agitateur pour des boues activées recueillies dans un bassin, avec un corps agitateur (2) fixé à un arbre (2) et comportant une paroi (3) formée de manière hyperboloïde, et avec une conduite d'alimentation d'air (5, 8) s'étendant au fond (4) du bassin, pour l'alimentation en air, où une section verticale (8) de la conduite d' alimentation d'air est orientée vers un évidement (6) du genre entonnoir, formé d'un côté inférieur du corps agitateur (2),
**caractérisé en ce que**
une ouverture de l'évidement (6), formée du côté inférieur, est recouverte par un élément de couverture (7), de manière à laisser dégagée une fente annulaire (10) d'une largeur prédéfinie, située entre une surface périphérique inférieure (9) du corps agitateur (2) et l'élément de couverture (7), et **en ce que** la section verticale (8) de la conduite d' alimentation d'air (8) est guidée à travers l'élément de couverture (7), coaxialement par rapport à l'arbre (1).

2. Dispositif agitateur selon la revendication 1, dans lequel la fente annulaire (10) présente une largeur comprise entre 1 cm et 15 cm, de préférence entre 2 cm et 10 cm.

3. Dispositif agitateur selon l'une des revendications précédentes, dans lequel sont prévues des nervures de cisaillement (11) s'étendant radialement à partir de la surface périphérique inférieure (9), dans une région située radialement à l'extérieur de celle-ci.

4. Dispositif agitateur selon la revendication 3, dans lequel une hauteur des nervures de cisaillement (11) augmente dans la direction d'un rebord périphérique extérieur du corps agitateur (2).

5. Dispositif agitateur selon l'une des revendications précédentes, dans lequel l'élément de couverture est conçu en symétrie de rotation.

6. Dispositif agitateur selon l'une des revendications précédentes, dans lequel l'élément de couverture est un disque (7) ou un cône ou corps du genre hyperboloïde, faisant saillie dans l'évidement (6) avec sa pointe.

7. Dispositif agitateur selon l'une des revendications précédentes, dans lequel l'élément de couverture est fixé fermement à une structure portant l'arbre (1) ou à un fond (4) d'un bassin, par rapport au corps agitateur (2).

8. Dispositif agitateur selon l'une des revendications 1 à 6, dans lequel l'élément de couverture est relié fermement à la paroi (3) du corps agitateur (2), à l'aide de moyens de liaison.

9. Dispositif agitateur selon la revendication 8, dans lequel les moyens de liaison comprennent des âmes (12) s'étendant essentiellement radialement, à partir du côté intérieur de la paroi (3), jusqu'à un côté supérieur de l'élément de couverture qui est tourné vers l'évidement (6).

10. Dispositif agitateur selon l'une des revendications 8 ou 9, dans lequel l'élément de couverture est un autre corps agitateur (18) du genre hyperboloïde, qui est relié de telle façon au corps agitateur (2), que l'autre pointe de celui-ci est détournée de l'évidement (6) du corps agitateur (2).

11. Dispositif agitateur selon la revendication 10, dans lequel d'autres nervures de cisaillement (19) sont prévues sur une section radialement extérieure d'un côté extérieur de l'autre corps agitateur (18).

12. Dispositif agitateur selon l'une des revendications précédentes, dans lequel l'arbre (1) est guidé à travers le corps agitateur (2) et logé, à l'une de ses extrémités, dans un palier récepteur prévu dans l'élément de couverture.

13. Dispositif agitateur selon l'une des revendications précédentes, dans lequel l'élément de couverture est maintenu de façon rotative dans un palier récepteur (13) entourant la conduite d'alimentation d'air.
